# EUROPÄISCHE PATENTSCHRIFT

(11) **EP 1 344 725 B1**
(45) Veröffentlichungstag und Bekanntmachung des Hinweises auf die Patenterteilung: **28.09.2005**
(21) Anmeldenummer: 03005699.8
(22) Anmeldetag: 13.03.2003
(51) Int. Cl.: B65G 1/10, B65G 1/137

(54) **Regalsystem**
Shelf system
Système d'étagères

(30) Priorität: 14.03.2002 DE 20204164 U
(43) Veröffentlichungstag der Anmeldung: 17.09.2003
(73) Patentinhaber: Deutsche Post AG, 53113 Bonn (DE)
(72) Erfinder: Schildknecht, Susanne, 53179 Bonn (DE)
(74) Vertreter: Jostarndt, Hans-Dieter

(56) Entgegenhaltungen:
- EP-A- 1 025 778
- DE-A- 4 131 567
- DE-U- 20 204 164
- GB-A- 2 286 576
- PATENT ABSTRACTS OF JAPAN vol. 006, no. 249 (M-177), 8. Dezember 1982 (1982-12-08) & JP 57 145704 A (NIHON FUAIRINGU SEIZOU KK), 8. September 1982 (1982-09-08)

## Beschreibung

Die Erfindung betrifft ein Regalsystem mit rechnergesteuerten Fachanzeigen wobei die rechnergesteuerten Fachanzeigen Kommissionierdaten anzeigen.

Die Deutsche Offenlegungsschrift DE 41 31 567 A1 offenbart ein gattungsgemäßes Regalsystem.

Das dort dargestellte Regalsystem ermöglicht durch im Bereich der Regalböden, beziehungsweise der Regaldecken, angeordnete Fachanzeigen, eine sichere und zuverlässige Orientierung eines Ware aus dem Regalfach entnehmenden Lageristen.

Das in der Deutschen Offenlegungsschrift DE 41 31 567 A1 dargestellte Regalsystem erstreckt sich parallel zu der Förderstrecke eines Kommissionierbehälter rechnergesteuert synchron zu den Fachanzeigen bewegenden Fördersystems. Hierdurch wird die Gefahr einer Fehlbedienung durch den Lageristen verringert.

Aus dem japanischen Patentdokument JP 57 145 704 A (Patent Abstracts of Japan) geht ein Regalsystem hervor, das mit einem rechnergesteuerten Anzeiger ausgestattet ist, der die Anzahl von aus dem Regal zu entnehmende Artikel anzeigt. Der Anzeiger wird an einer geeigneten Stelle der Stirnseite des Regals angebracht und ist mit einem Steuerungsrechner verbunden, der die Kommissionierdaten aktualisiert. Das Fach aus dem Artikel zu entnehmen sind wird bei dem Regalsystem durch das Aufleuchten von Anzeigeleuchten angezeigt, die im Bereich der einzelnen Entnahmefächer angebracht sind. Die Anzahl in der die Artikel zu entnehmen sind, wird an einer weiteren Anzeige dargestellt.

Die UK-Patentanmeldung GB 2 286 576 A beschreibt ein Ständersystem zur Lagerung von Fässern und Tonnen das es ermöglicht die Position der Fässer zwischen einer horizontalen Position und einer gekippten Position zu schwenken. Das System besteht aus einem Ständer und einer daran montierten Schiene die auf mechanische Weise von der horizontalen Lage in eine gekippte Lage gebracht werden kann. Die Schiene ist ausziehbar um das Be- und Entladen des Ständersystems zu vereinfachen.

Der Erfindung liegt die Aufgabe zugrunde, ein gattungsgemäßes Regalsystem so weiterzuentwickeln, dass eine Entnahme der Kommissionierware aus dem Regalsystem möglichst einfach und ergonomisch erfolgen kann.

Erfindungsgemäß wird diese Aufgabe durch ein Regalsystem nach dem Patentanspruch 1 gelöst.

Vorteilhafte Weiterbildungen des Regalsystems sind Gegenstand der Unteransprüche 2 bis 7.

Es ist insbesondere vorgesehen, dass die mit den Anzeigevorrichtungen versehenen Regalbretter verschiebbar in dem Regalsystem gelagert sind.

Die Erfindung sieht vor, das Regalsystem so zu gestalten, dass das Regalsystem eine Vielzahl von verschiebbaren Fachböden enthält, dass die Fachböden im Bereich einer Stirnfläche jeweils wenigstens ein Anzeigeelement für Kommissionierdaten enthalten, und dass das Regalsystem Datenverbindungsmittel zum Verbinden der Anzeigeelemente mit einem Steuerungsrechner für die Anzeigeelemente enthält, wobei die Verbindungselemente so beschaffen sind, dass ein Datenaustausch zwischen den Anzeigeelementen und dem Steuerungsrechner unabhängig von der relativen Position zwischen dem Fachboden und den übrigen Bestandteilen des Regalsystems erfolgen kann.

Vorzugsweise ist das Regalsystem so gestaltet, dass das Datenverbindungsmittel eine Datenleitung in einer Länge ist, die auch in einem ausgezogenen Zustand der Regalfachböden eine Verbindung mit dem Steuerungsrechner ermöglicht.

Um einen wirksamen und zuverlässigen Schutz des Datenübertragungskabels zu erzielen und um Beeinträchtigungen bei einem Ausfahren der Regalfachböden zu vermeiden ist es besonders vorteilhaft, dass das Kabel wenigstens abschnittsweise in einer Panzerkette gelagert ist.

Eine Erhöhung der mechanischen Zuverlässigkeit des Regalsystems erfolgt vorzugsweise dadurch, dass die Fachböden in einer Führungsschiene verschiebbar gelagert sind.

Zur Erleichterung der Bedienbarkeit ist es vorteilhaft, dass wenigstens ein Teil der Fachböden mit einer Vorrichtung zu einem automatischen Ausfahren und/oder Einfahren der Regalfachböden in das Regalsystem verbunden ist.

Dies geschieht in einer ersten bevorzugten Ausführungsform dadurch, dass wenigstens ein Teil der Regalfachböden jeweils mit mindestens einer druckerzeugenden Vorrichtung verbunden ist.

Eine weitere, gleichfalls bevorzugte Ausführungsform zeichnet sich dadurch aus, dass die druckerzeugende Vorrichtung ein Federelement umfasst.

Ferner ist es zweckmäßig, das Regalsystem so zu gestalten, dass die druckerzeugende Vorrichtung ein Gasdruckelement umfasst .

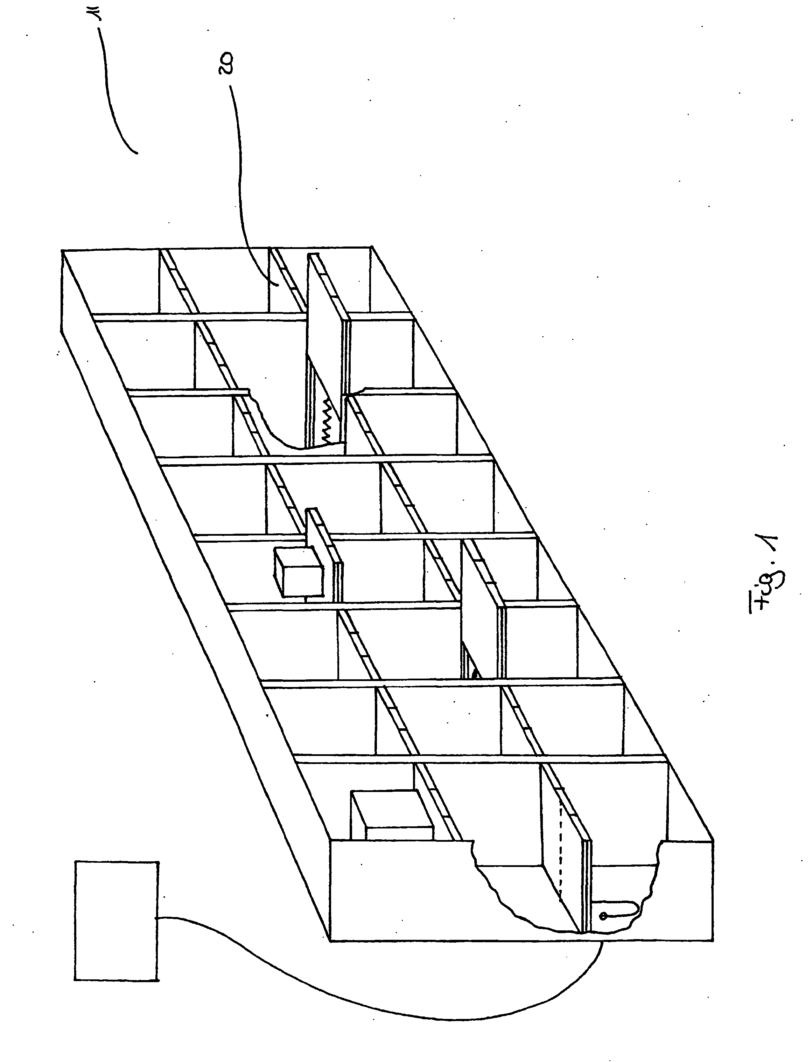

Weitere Vorteile, Besonderheiten und zweckmäßige Weiterbildungen der Erfindung ergeben sich aus den Unteransprüchen und der nachfolgenden Darstellung eines bevorzugten Ausführungsbeispiels anhand der Zeichnung.

Die Zeichnung zeigt ein erfindungsgemäßes Regalsystem 10 mit Regalfachböden 20, wobei sich im Bereich von Stirnfächern der Regalfachböden 20 jeweils wenigstens ein Anzeigeelement zur Anzeige der Anzahl von aus dem Fach zu entnehmenden, beziehungsweise in das Fach zu legenden Artikeln befindet.

Mit Hilfe des dargestellten Regalsystems kann ein Kommissionieren von Waren auf eine besonders einfache und zuverlässige Weise und mit einer hohen Arbeitssicherheit und Ergonomie erfolgen.

Beispielsweise sind die Regalfachböden über eine druckerzeugende Vorrichtung mit dem Regalsystem verbunden. Durch das Lösen eines nicht dargestellten Festhaltemittels fährt jeweils wenigstens ein Regalfachboden hervor, sodass aus ihm leichter zu kommissionierende Waren entnommen werden können.

Selbstverständlich ist es gleichfalls möglich, ein erfindungsgemäßes Regalsystem ohne mechanische Mittel für ein automatisches Aus- oder Einfahren der Regalfachböden zu gestalten. In diesem Fall erfolgt ein Ausziehen der Regalfachböden, beziehungsweise ein Einschieben der Regalfachböden manuell.

Besonders bevorzugte der dargestellten Ausführungsbeispiele ermöglichen es, dass sowohl der Regalfachboden als auch auf der Stirnseite des Regalfachbodens befestigte, zur Steuerung von Kommissioniervorgängen dienende Anzeigeelemente aus dem Regalfachboden in eine für eine Entnahme geeignete Position gebracht werden können.

## Patentansprüche

1. Regalsystem mit rechnergesteuerten Fachanzeigen, wobei die rechnergesteuerten Fachanzeigen Kommissionierdaten anzeigen,
**dadurch gekennzeichnet,**
**dass** das Regalsystem eine Vielzahl von verschiebbaren Fachböden enthält, dass die Fachböden im Bereich einer Stirnfläche jeweils wenigstens ein Anzeigeelement für die Anzahl aus dem Fach zu entnehmender beziehungsweise in das Fach zu legender Artikel enthalten und dass das Regalsystem Datenverbindungsmittel zum Verbinden der Anzeigeelemente mit einem Steuerungsrechner für die Anzeigeelemente enthält, wobei das Datenverbindungsmittel eine Datenleitung in einer Länge ist, die auch in einem ausgezogenen Zustand der Regalfachböden einen Datenaustausch zwischen den Anzeigeelementen und dem Steuerungsrechner ermöglicht.

2. Regalsystem nach Anspruch 1,
**dadurch gekennzeichnet,**
**dass** das Kabel wenigstens abschnittsweise in einer Panzerkette gelagert ist.

3. Regalsystem nach einem oder mehreren der vorangegangenen Ansprüche,
**dadurch gekennzeichnet,**
**dass** die Fachböden in einer Führungsschiene verschiebbar gelagert sind.

4. Regalsystem nach einem oder mehreren der vorangegangenen Ansprüche,
**dadurch gekennzeichnet,**
**dass** wenigstens ein Teil der Fachböden mit einer Vorrichtung zu einem automatischen Ausfahren und/oder Einfahren der Regalfachböden in das Regalsystem verbunden ist.

5. Regalsystem nach Anspruch 4,
**dadurch gekennzeichnet,**
**dass** wenigstens ein Teil der Regalfachböden jeweils mit mindestens einer druckerzeugenden Vorrichtung verbunden ist.

6. Regalsystem nach Anspruch 5,
**dadurch gekennzeichnet,**
**dass** die druckerzeugende Vorrichtung ein Federelement umfasst.

7. Regalsystem nach einem oder beiden der Ansprüche 5 oder 6,
**dadurch gekennzeichnet,**
**dass** die druckerzeugende Vorrichtung ein Gasdruckelement umfasst.

## Claims

1. A shelf system with computer-controlled compartment displays, whereby the computer-controlled compartment displays show order picking data,
**characterized in that**
the shelf system comprises a plurality of sliding shelves, **in that**, in a frontal area, the shelves each comprise at least one display element indicating the number of articles to be taken out of the compartment or to be placed into the compartment, and **in that** the shelf system comprises data connection means which serve to connect the display elements to a control computer for the display elements, whereby the data connection means is a data line in a length that allows a data exchange between the display elements and the control computer, even in the fully pulled-out position.

2. The shelf system according to Claim 1,
**characterized in that**
at least a section of the cable is enclosed in an armored chain.

3. The shelf system according to one or more of the preceding claims,
**characterized in that**
the shelves are mounted so as to slide in a guide rail.

4. The shelf system according to one or more of the preceding claims,
**characterized in that**
at least some of the shelves are connected to a device that automatically slides the shelves out of and/or into the shelf system.

5. The shelf system according to Claim 4,
**characterized in that**
at least some of the shelves are connected to at least one pressure-generating device.

6. The shelf system according to Claim 5,
**characterized in that**
the pressure-generating device comprises a spring element.

7. The shelf system according to one or both of Claims 5 or 6,
**characterized in that**
the pressure-generating device comprises a gas pressure element.

## Revendications

1. Un système de rayonnage avec des indications de rayon commandées par ordinateur, lesquelles indications de rayon commandées par ordinateur indiquent des données de préparation des commandes,
**caractérisé en ce que**
le système de rayonnage contient une multitude des étages de rayon déplaçables, que les étages de rayon contiennent, chaque un, au secteur d'une face de la dent au moins un élément d'indication pour le nombre des articles à prendre dans le rayon respectivement à mettre dans le rayon et que le système de rayonnage contient des moyens de circuit de données pour la connexion des éléments d'indication avec un ordinateur de gestion pour les éléments d'indication, lequel moyen de circuit de données est un ligne de transmission des données d'un longueur qui rend possible aussi dans un état élongé des étages de rayon une transmission des données entre les éléments d'indication et l'ordinateur de gestion.

2. Un système de rayonnage selon la revendication 1,
**caractérisé en ce que**
le câble est tourné sur paliers au moins par secteurs dans une chaîne blindée.

3. Un système de rayonnage selon une ou plusieurs des revendications précédentes,
**caractérisé en ce que**
les étages de rayon sont tournés sur paliers d'une façon déplaçable dans une glissière de guidage.

4. Un système de rayonnage selon une ou plusieurs des revendications précédentes.
**caractérisé en ce que**
au moins une partie des étages de rayon est liée avec un dispositif pour déployer et/ ou rentrer d'une façon automatique des étages de rayon dans le système de rayonnage.

5. Un système de rayonnage selon la revendication 4,
**caractérisé en ce que**
au moins une partie des étages de rayons est liée, chaque une, avec au moins un dispositif à générer de la pression.

6. Un système de rayonnage selon la revendication 5,
**caractérisé en ce que**
le dispositif à générer de la pression contient un élément à ressort.

7. Un système de rayonnage selon une ou plusieurs des revendications précédentes,
**caractérisé en ce que**
le dispositif à générer de la pression contient un élément à pression de gaz.
